# FASCICULE DE BREVET EUROPEEN

(11) **EP 3 356 138 B1**
(45) Date de publication et mention de la délivrance du brevet: **17.11.2021**
(21) Numéro de dépôt: 16770713.2
(22) Date de dépôt: 14.09.2016
(51) Int. Cl.: B32B 17/10

(54) **POCHE A PAROIS SOUPLES, ET PROCEDE DE FABRICATION D'UNE TELLE POCHE**
BEUTEL MIT FLEXIBLEN WÄNDEN UND VERFAHREN ZUR HERSTELLUNG EINES DERARTIGEN BEUTELS
BAG WITH FLEXIBLE WALLS AND PROCESS FOR THE MANUFACTURE OF SUCH A BAG

(30) Priorité: 02.10.2015 FR 1559406
(43) Date de publication de la demande: 08.08.2018
(73) Titulaire: Simtech S.P.R.L., 7503 Froyennes (BE)
(72) Inventeur: VANDROMME, Pascal, 59830 Cysoing (FR); ROSIER, Reza, 7711 Mouscron (BE)
(74) Mandataire: Cabinet Beau de Loménie
(86) Numéro de dépôt international: PCT/EP2016/071631
(87) Numéro de publication internationale: WO 2017/055084

(56) Documents cités:
- FR-A1- 2 215 314
- FR-A1- 2 775 929
- FR-A1- 2 839 065
- FR-A1- 2 906 754
- JP-A- 2008 169 052

## Description

La présente invention concerne une poche de traitement, utilisée notamment dans la fabrication de verre feuilleté. En particulier, la présente invention concerne une poche de traitement destinée à être ouverte ou fermée de façon manuelle, par un opérateur.

On connaît différents types de poche de traitement. Certaines poches, dites automatiques, sont positionnées sur un cadre mobile capable d'ouvrir puis de refermer la poche dans la zone de chargement, de la déplacer dans la zone de chauffe, puis de rouvrir et refermer la poche dans la zone de déchargement. Pour de telles poches, l'opérateur ou une machine (robot) n'a qu'à glisser le verre à l'intérieur de la poche dans la zone de chargement, puis l'en ressortir à la fin du traitement, dans la zone de déchargement. De telles poches sont notamment utilisées pour des verres de grandes tailles.

Il existe également des poches, dites manuelles, pour lesquelles l'opérateur doit également effectuer l'ouverture et la fermeture. Dans ce cas, l'opérateur ouvre la poche pour pouvoir y positionner le verre à traiter, puis la referme avant de la placer sur un cadre conduisant la poche dans la zone de chauffe. En sortie, l'opérateur doit rouvrir la poche pour en extraire le verre traité. De telles poches sont notamment utilisées pour traiter différents verres en même temps, et éventuellement de tailles différentes. De telles poches peuvent également être conçues spécifiquement pour des verres de forme spéciale, fabriqués en petites séries.

Cependant, les poches manuelles restent longues et pénibles à manipuler. En effet, la fermeture étanche de la poche manuelle n'est pas toujours aisée à manipuler : ainsi, lorsque la poche manuelle est fermée par une fermeture à glissière étanche, celle-ci peut se trouver grippée de temps en temps, et nécessiter le port de gants pour l'opérateur, ce qui complique la préhension de la tirette du curseur de la fermeture à glissière.

Par ailleurs, une mauvaise fermeture d'une poche manuelle peut empêcher le vide de se créer dans la poche, et donc conduire à un mauvais traitement thermique du verre feuilleté.

Des poches de traitement sont décrites notamment dans les documents FR 2 775 929, FR 2 839 065 ou bien encore JP 2008/169052.

### Objet et résumé de l'invention

La présente invention vise à résoudre les différents problèmes techniques énoncés précédemment. En particulier, la présente invention vise à fournir une poche manuelle offrant une ouverture et une fermeture étanche, tout en étant aisée et rapide à manipuler pour un opérateur. Un autre but de la présente invention est de fournir une poche qui soit plus robuste dans le temps, et qui améliore le procédé de traitement du verre qu'elle contient.

Ainsi, selon un aspect, il est proposé une poche à parois souples pour le feuilletage de verre, destinée à être dépressurisée. La poche comprend :
- deux feuilles superposées et assemblées de manière étanche selon leurs côtés respectifs regroupés par paires, afin de définir un volume intérieur, et
- une zone d'ouverture pour ouvrir ou fermer la poche.

La première feuille comporte une portion d'extrémité, dite première portion d'extrémité et la deuxième feuille comporte une portion d'extrémité, dite deuxième portion d'extrémité. Les première et deuxième portions d'extrémités délimitent la zone d'ouverture de la poche.

La première feuille, en particulier la première portion d'extrémité, comprend un pli unique, ledit pli étant longitudinal et formant un rabat s'étendant le long de la zone d'ouverture de la poche.

Ainsi, grâce au pli longitudinal, il est possible d'obtenir une poche manuelle aisée et rapide à manipuler pour l'opérateur. En effet, celui-ci n'a qu'un pli à manipuler pour ouvrir ou fermer la poche. Il peut notamment ouvrir la poche manuelle d'une seule main, et venir placer le verre à traiter à l'intérieur de la poche de l'autre main. Par ailleurs, le système d'ouverture et de fermeture étanche de la poche est simple à réaliser, et plus particulièrement ne nécessite pas ou peu de pièces rapportées, telle qu'une fermeture à glissière ou une fermeture à joint, ce qui limite les coûts de fabrication, le temps de manipulation, et accélère la montée en température de la poche grâce à une inertie thermique plus faible.

Autrement dit, la première feuille comporte un unique rabat, dans la première portion d'extrémité, formé par l'unique pli. La première portion d'extrémité présente :
- une position ouverte dans laquelle le rabat est déplié et permet l'accès au volume intérieur de la poche et
- une position fermée dans laquelle le rabat est replié sur la deuxième portion d'extrémité afin de permettre une fermeture étanche de la zone d'ouverture.

Le rabat formé par le pli permet la fermeture étanche de la poche : l'opérateur n'a ainsi qu'à manipuler le rabat pour refermer la poche de manière étanche. On simplifie alors le travail de l'opérateur, et limite par conséquent les erreurs de manipulation des poches.

Selon l'invention, le pli longitudinal unique de la première portion d'extrémité comporte au moins un matériau élastomérique obtenu par vulcanisation de la première portion d'extrémité en position fermée, de manière à ce que le matériau élastomérique soit déformé élastiquement lorsque la première portion d'extrémité est en position ouverte et ramène la première portion d'extrémité en position fermée.

Le pli est formé de manière à ce qu'il présente une mémoire de forme. Plus particulièrement, la position du rabat, au repos, est la position fermée dans laquelle la poche est fermée de manière étanche. Ainsi, l'opérateur n'a presque plus d'action spécifique à mener pour refermer la poche de manière hermétique, puisque le rabat revient élastiquement en position fermée lorsqu'on cesse tout sollicitation sur lui : l'opérateur n'a qu'à lâcher le rabat ou l'accompagner dans sa position de repos, pour avoir une poche fermée hermétiquement. Un tel effet est notamment obtenu grâce à la vulcanisation du rabat dans sa position fermée. En effet, le matériau élastomérique est vulcanisé dans sa position de repos qui correspond à la fermeture étanche de la poche, et l'ouverture du rabat entraîne une déformation élastique du pli qui revient ensuite naturellement en position fermée. Enfin, la position de repos du pli étant figée par la vulcanisation, on obtient un effet de mémoire de forme qui est durable et constant dans le temps. Plus précisément, un tel effet de mémoire de forme peut s'expliquer notamment par un fluage du matériau polymérique cru, lorsque la première portion d'extrémité est pliée à pression et température élevées, par exemple à pression et température de vulcanisation, mais n'est pas encore vulcanisée. En effet, une masse de matériau polymérique cru peut fluer, lorsque la pression et la température sont élevées, sous l'effet de tensions créées par le pliage, et venir compenser les contraintes de déformation du matériau polymérique cru causées par le pliage. Il est en résulte qu'une fois flué, le matériau polymérique cru est à nouveau à l'équilibre (en position plié) et peut alors être vulcanisé dans cet état, ce qui permet de retrouver, au repos, le rabat en position pliée. Le fluage peut notamment intervenir en même temps que l'étape de vulcanisation, pendant l'intervalle de temps pendant lequel le matériau élastomérique n'est pas encore complètement vulcanisé.

Préférentiellement, la deuxième portion d'extrémité comporte au moins un matériau élastomérique obtenu par vulcanisation lorsque la première portion d'extrémité est en position fermée. Ainsi, la deuxième portion d'extrémité est formée et conformée à la position repliée du rabat : on améliore ainsi la complémentarité des deux portions d'extrémités formant la fermeture étanche de la poche.

Préférentiellement, ledit rabat comprend une surface de contact venant en contact avec la deuxième portion d'extrémité lorsque la poche est fermée. La surface de contact peut présenter une rugosité Ra mesurée selon la norme NF EN ISO 4287 inférieure ou égale à 6µm, de préférence inférieure ou égale à 5µm, et plus préférentiellement inférieure ou égale à 4µm. Par ailleurs, la surface de contact peut présenter une rugosité Ra mesurée selon la norme NF EN ISO 4287 supérieure ou égale à 1µm, de préférence supérieure ou égale à 2µm. La rugosité de surface spécifique permet d'obtenir une adhésion qui vient améliorer l'étanchéité de la fermeture de la poche. Ainsi, grâce à sa rugosité, le rabat peut présenter une adhésion au contact de la deuxième portion d'extrémité, lorsque le rabat revient en position fermée. La combinaison de la position fermée au repos du rabat, combinée à l'adhésion obtenue entre le rabat et la deuxième portion d'extrémité lorsque le rabat est en position fermée, conduit à une fermeture rapide et efficace en termes de manipulation et d'étanchéité.

Préférentiellement, la deuxième portion d'extrémité comprend une surface de contact venant en contact avec la première portion d'extrémité lorsque la poche est fermée. La surface de contact peut présenter une rugosité Ra mesurée selon la norme NF EN ISO 4287 inférieure ou égale à 6µm, de préférence inférieure ou égale à 5µm, et plus préférentiellement inférieure ou égale à 4µm. Par ailleurs, la surface de contact peut présenter une rugosité Ra mesurée selon la norme NF EN ISO 4287 supérieure ou égale à 1µm, de préférence supérieure ou égale à 2µm. Les deux surfaces de contact participent alors toutes les deux à l'adhésion : les deux surfaces de contact viennent en contact intime entre elles et permettent alors, sans moyen mécanique ou chimique mais éventuellement avec l'aide du vide qui s'établit à l'intérieur de la poche, de rester collées l'une à l'autre de manière étanche.

Préférentiellement, la surface de contact du rabat et la surface de contact de la deuxième portion d'extrémité comportent chacune au moins un matériau élastomérique obtenu par une étape de vulcanisation commune, lorsque la première portion d'extrémité est en position fermée.

Selon un mode de réalisation, seule la première feuille, en particulier seule la première portion d'extrémité, comprend un pli unique, qui est longitudinal et la deuxième portion d'extrémité comprend un moyen d'étanchéité, par exemple un bourrelet longitudinal en matériau élastomérique s'étendant le long de la zone d'ouverture de la poche, monté en regard du pli longitudinal de la première portion d'extrémité, le moyen d'étanchéité étant adapté à coopérer avec le pli longitudinal de la première portion d'extrémité lorsque la poche est fermée. Dans ce premier mode de réalisation, la fermeture est constituée par la combinaison d'un pli longitudinal et d'un bourrelet venant se loger dans ledit pli. La combinaison de ces deux moyens permet d'obtenir l'étanchéité souhaitée. Par ailleurs, l'opérateur peut aisément manipuler l'unique pli longitudinal pour ouvrir la poche.

Selon un autre mode de réalisation, la deuxième feuille, en particulier la deuxième portion d'extrémité, comporte également un pli unique, ledit pli étant longitudinal et formant un rabat s'étendant le long de la zone d'ouverture de la poche. Le pli longitudinal de la deuxième portion d'extrémité comporte au moins un matériau élastomérique obtenu par vulcanisation de la deuxième portion d'extrémité lorsque la première portion d'extrémité est en position fermée, de manière à ce que le matériau élastomérique soit déformé élastiquement lorsque la première portion d'extrémité est en position ouverte et ramène la première portion d'extrémité en position fermée.

Dans ce mode de réalisation, chaque feuille de la poche comporte un rabat, et notamment chaque feuille de la poche comporte un unique rabat formé par l'unique pli, les deux rabats coopérant entre eux pour permettre l'ouverture ou la fermeture étanche de la poche. Les deux plis étant formés de manière similaire, ils présentent alors la même forme au repos, conduisant ainsi à une adhésion plus facile et rapide entre les deux rabats lors de la fermeture de la poche.

Préférentiellement, les rabats de la première et de la deuxième portion d'extrémité sont de forme longitudinale, et ont des extrémités distales communes, par exemple comprennent les mêmes extrémités distales.

Préférentiellement, la première et/ou deuxième portion d'extrémité comporte également des moyens supplémentaires de fermeture, par exemple des aimants ou des fixations réversibles. De tels moyens supplémentaires peuvent améliorer et augmenter l'effet mémoire et l'étanchéité de la zone d'ouverture.

Préférentiellement, la première feuille, et éventuellement la deuxième feuille, comprend une ou plusieurs couches de tissu enduit d'un matériau élastomérique. Un tel matériau présente des propriétés de résistance mécanique et de tenue à la chaleur qui sont adaptées à l'utilisation en tant que poche de traitement.

Préférentiellement, le matériau de la première portion d'extrémité, et éventuellement la deuxième portion d'extrémité, présente une épaisseur supérieure à celle du matériau du reste de la feuille. Plus particulièrement, le matériau du rabat de la première portion d'extrémité, et éventuellement de la deuxième portion d'extrémité, présente une épaisseur supérieure à celle du matériau du reste de la feuille. Par exemple, la première portion d'extrémité, et éventuellement la deuxième portion d'extrémité, peut comporter plusieurs couches de tissu enduit d'un matériau élastomérique. Une telle configuration permet d'obtenir une zone d'ouverture plus résistante dans le temps, mais également plus rigide que le reste de la poche. Le rabat formé par le pli longitudinal, se déforme alors moins facilement, ce qui permet d'avoir un rabat sensiblement plan au repos, et donc une meilleure étanchéité de la poche à l'état fermé. Ainsi, la zone d'ouverture est moins sujette à la formation d'ondulations ou de rides au niveau du rabat, ce qui pourrait créer des canaux de circulation d'air limitant l'étanchéité de la poche.

Par exemple, chaque feuille peut comprendre une couche de matériau textile enduit d'un matériau élastomérique ; chaque portion d'extrémité peut comprendre deux couches de matériau textile enduit d'un matériau élastomérique, et chaque rabat peut comprendre trois couches de matériau textile enduit d'un matériau élastomérique.

Préférentiellement, la longueur du ou des rabats de la poche est comprise entre 3cm et 30cm, de préférence entre 5cm et 20cm, et plus préférentiellement entre 7cm et 15cm. La longueur du rabat est choisie de manière à faciliter sa manipulation par l'opérateur : en particulier, on choisira une longueur de rabat sensiblement égale à la longueur des doigts humains, afin d'obtenir une manipulation aisée et rapide du rabat par l'opérateur.

Préférentiellement, le pli longitudinal est recouvert d'un matériau élastomérique sur sa partie extérieure. La partie extérieure du pli longitudinal se trouve vulcanisée en position fermée : elle doit donc être étirée pour ouvrir la poche, et revient ensuite en position de repos en ramenant le rabat en position fermée.

Selon un autre aspect, il est également proposé un procédé de fabrication d'une poche à parois souples pour le feuilletage de verre, la poche comprenant :
- deux feuilles superposées et assemblées de manière étanche selon leurs côtés respectifs regroupés par paires, afin de définir un volume intérieur, et
- une zone d'ouverture pour ouvrir ou fermer la poche.

La première feuille comporte une portion d'extrémité, dite première portion d'extrémité, et la deuxième feuille comporte une portion d'extrémité, dite deuxième portion d'extrémité. Les première et deuxième portions d'extrémités délimitent la zone d'ouverture de la poche.

Selon le procédé, on réalise un pli unique, sur la première feuille, en particulier sur la première portion d'extrémité, ledit pli étant longitudinal et formant un rabat s'étendant le long de la zone d'ouverture de la poche.

Préférentiellement, la première portion d'extrémité présente :
- une position ouverte dans laquelle le rabat est déplié et permet l'accès au volume intérieur de la poche et
- une position fermée dans laquelle le rabat est replié sur la deuxième portion d'extrémité afin de permettre une fermeture étanche de la zone d'ouverture.

Selon l'invention, le procédé comprend les étapes suivantes :
- on réalise au moins une partie de la première portion d'extrémité avec un matériau élastomérique cru, de préférence lisse,
- on plie longitudinalement, sur la deuxième portion d'extrémité, ladite partie de la première portion d'extrémité en matériau élastomérique cru, pour former un rabat s'étendant le long de la zone d'ouverture de la poche, et
- on cuit, de préférence sous pression, le rabat de la première portion d'extrémité en matériau élastomérique cru de manière à former un pli avec un matériau élastomérique vulcanisé.

Préférentiellement :
- on réalise au moins une partie de la deuxième portion d'extrémité avec un matériau élastomérique cru, de préférence lisse, et
- on cuit simultanément, de préférence sous pression, le rabat de la première portion d'extrémité en matériau élastomérique cru de manière à former un pli, et la partie de la deuxième portion d'extrémité en matériau élastomérique cru.

Préférentiellement, le procédé comprend les étapes suivantes :
- on réalise également au moins une partie de la deuxième portion d'extrémité avec un matériau élastomérique cru, de préférence lisse,
- on plie longitudinalement, sous le rabat de la première portion d'extrémité, ladite partie de la deuxième portion d'extrémité en matériau élastomérique cru, pour former un rabat s'étendant le long de la zone d'ouverture de la poche, parallèlement au rabat de la première portion d'extrémité, et
- on cuit, de préférence sous pression, le rabat de la première portion d'extrémité et de la deuxième portion d'extrémité en matériau élastomérique cru, de manière à former, sur chaque feuille, un pli avec un matériau élastomérique vulcanisé.

Préférentiellement, ledit rabat comprend une surface de contact venant en contact avec la deuxième portion d'extrémité lorsque la poche est fermée et, préalablement à la vulcanisation, on intercale une couche anti-collante, par exemple un anti-collant liquide, entre le matériau élastomérique cru de la surface de contact et la deuxième portion d'extrémité avec laquelle il est en contact à l'état plié.

Préférentiellement, la deuxième portion d'extrémité comprend une surface de contact venant en contact avec la première portion d'extrémité lorsque la poche est fermée et, préalablement à la vulcanisation, on intercale une couche anti-collante, par exemple un anti-collant liquide, entre le matériau élastomérique cru de la surface de contact de la première portion d'extrémité et le matériau élastomérique cru de la surface de contact de la deuxième portion d'extrémité.

### Brève description des dessins

L'invention et ses avantages seront mieux compris à la lecture de la description détaillée de deux modes de réalisation particuliers, pris à titre d'exemples nullement limitatifs et illustrés par les dessins annexés sur lesquels :
- la figure **1** est une vue schématique en perspective d'un premier mode de réalisation d'une poche selon l'invention, à l'état fermé,
- la figure **2** est une vue en coupe de la poche de la figure **1**, à l'état fermé,
- la figure **3** est une vue schématique de la poche de la figure **1**, à l'état ouvert,
- la figure **4** est une vue en coupe de la poche de la figure **3**, à l'état ouvert,
- la figure **5** est une vue schématique en perspective d'un deuxième mode de réalisation d'une poche selon l'invention, à l'état ouvert,
- la figure **6** est une vue en coupe de la poche de la figure **5**, à l'état ouvert.

### Description détaillée de l'invention

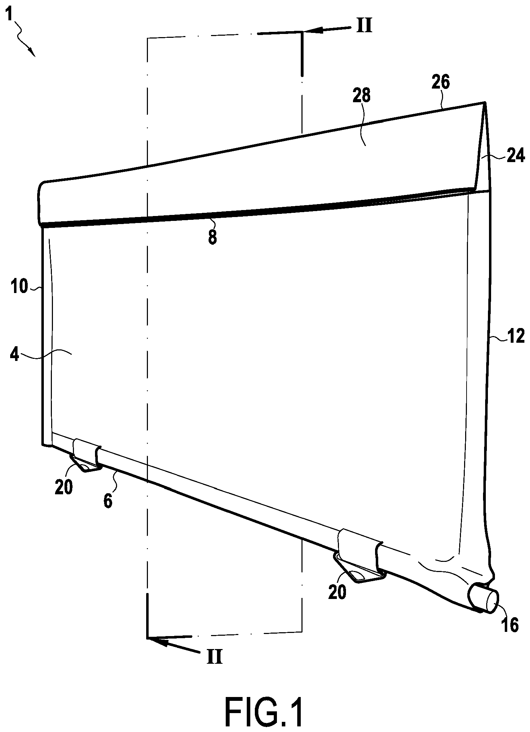

Les figures 1 à 4 illustrent une poche 1 de traitement pour le feuilletage du verre selon la présente invention.

La poche 1 comprend deux feuilles souples 2, 4 sensiblement rectangulaires, qui sont superposées et assemblées entre elles selon leurs côtés respectifs. Ainsi, les deux feuilles 2, 4 comprennent un côté longitudinal inférieur 6 et deux côtés latéraux 10, 12 communs. Enfin, les deux feuilles 2, 4 comprennent également un côté longitudinal supérieur correspondant à une zone d'ouverture 8 de la poche 1.

Hormis la zone d'ouverture 8, les côtés des deux feuilles 2, 4 sont liés entre eux de manière étanche, afin de permettre la dépressurisation de la poche lors du feuilletage du verre. La zone d'ouverture 8 permet d'accéder au volume intérieur 14 de la poche 1, dans lequel est placé le verre destiné à être feuilleté. La zone d'ouverture 8 doit notamment être étanche à l'état fermé afin de permettre la dépressurisation de la poche avant l'étape de chauffe.

Chaque feuille 2, 4 peut être formée par une ou plusieurs couches de textile enduit d'un matériau élastomérique. Un tel matériau permet d'obtenir une poche souple qui est étanche et résistante aux hautes températures.

La poche 1 peut comprendre un moyen de drainage 16, par exemple un ressort à spires non-jointives, pourvu d'un embout distal pour être raccordé à une source de vide et permettant de collecter l'air contenu dans la poche. Le moyen de drainage 16 peut notamment être monté le long du côté longitudinal inférieur 6 de la poche, et être séparé du volume intérieur 14 de la poche par une membrane de séparation 18.

La poche 1 peut enfin comprendre des éléments de maintien mécanique. Ainsi, la poche 1 peut comprendre des anneaux de fixation 20, dans le cas présent au nombre de deux et montés sur le côté longitudinal inférieur 6. De tels anneaux 20 permettent notamment de fixer la poche 1 sur un cadre, pour le passage dans un four. La poche 1 peut également comprendre des moyens de maintien (non représentés) montés le long des côtés latéraux 10, 12 et permettant à la poche de ne pas se plier lorsqu'elle est maintenue debout.

Afin de permettre la fermeture étanche de la poche 1, la première feuille 2 comprend une portion d'extrémité 22, dite première portion d'extrémité 22, et la deuxième feuille 4 comprend une portion d'extrémité 24, dite deuxième portion d'extrémité 24. Les première et deuxième portions d'extrémités 22, 24 délimitent la zone d'ouverture 8 de la poche 1 et sont conçues pour permettre la fermeture étanche de la poche.

Ainsi, la première portion d'extrémité 22 comporte un pli unique 26 qui forme un rabat 28 venant se replier sur la deuxième portion d'extrémité 24. L'unique pli 26 et le rabat 28 permettent d'obtenir une poche 1 qui est aisée et rapide à ouvrir, sans nécessiter de moyen de fermeture rapporté. L'opérateur peut alors facilement ouvrir ou fermer la poche 1, par simple manipulation du rabat 28. De plus, la poche est plus facile et moins couteuse à fabriquer.

Plus précisément, le pli longitudinal 26 est formé de manière à ce que la position repliée du rabat 28 soit la position au repos du rabat 28, lorsqu'il n'est pas sollicité mécaniquement par l'opérateur. Le pli longitudinal 26 peut par exemple être formé par pliage sous pression de la première portion d'extrémité 22 à l'état cru, avant vulcanisation du matériau polymérique à l'état plié. Lors du pliage, et au début de la vulcanisation, le matériau polymérique cru va être amené, sous l'effet des contraintes de pliage, à fluer et à retrouver une nouvelle position d'équilibre, à l'état plié. Puis le matériau polymérique est vulcanisé et garde donc la même position d'équilibre au repos : la position du rabat 28. L'opérateur peut donc ne pas intervenir pour fermer la poche : il lui suffit de lâcher le rabat 28 pour que celui-ci retrouve sa position de repos et se replie sur la deuxième portion d'extrémité 24.

Selon le mode de réalisation illustré aux figures 1 à 4, la deuxième portion d'extrémité 24 peut aussi comporter un pli 30 qui forme un rabat 32 venant se replier sur la deuxième portion d'extrémité 24. Le pli 30 et le rabat 32 permettent de coopérer avec le pli 26 et le rabat 28 pour permettre une fermeture étanche de la poche 1. Le pli 30 peut notamment être formé de manière identique, et en même temps que le pli unique 26.

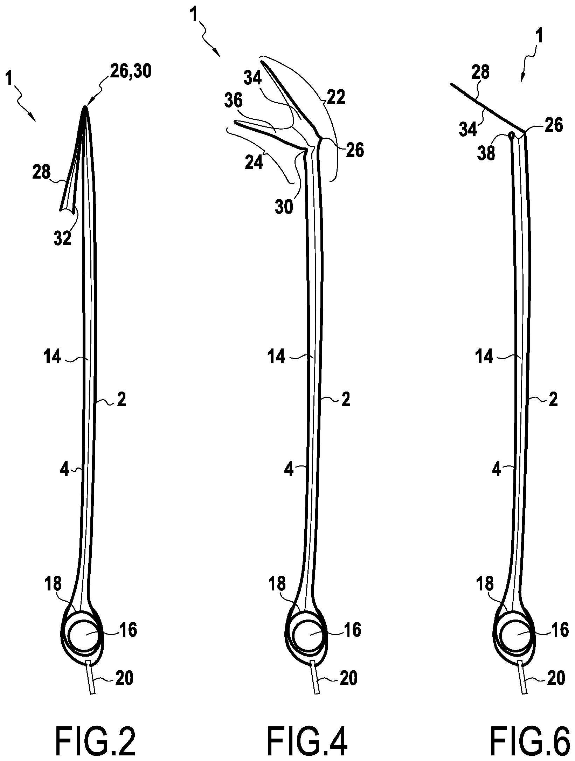

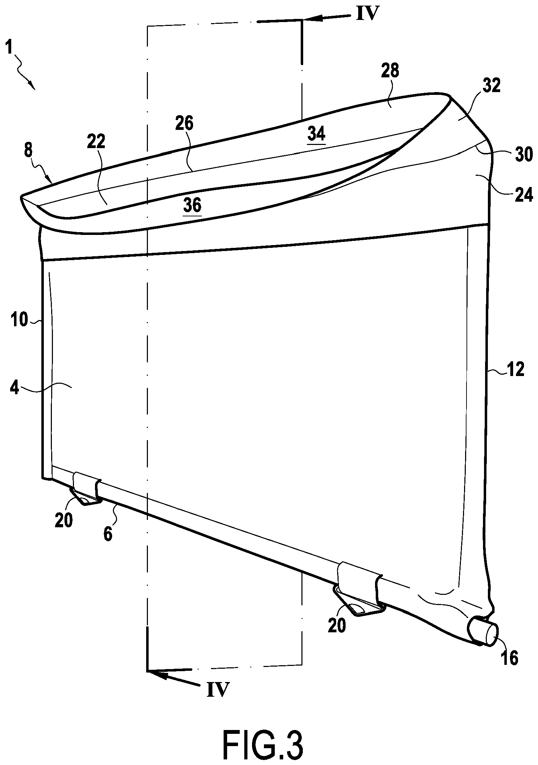

Les figures 1 et 2 représentent la poche 1 à l'état fermé, tandis que les figures 3 et 4 représentent la poche 1 à l'état ouvert. Comme on peut le constater sur la figure 4, les plis 26 et 30 ne s'ouvrent pas complètement lorsqu'on ouvre la poche 1 : les plis 26, 30 essaient de garder leur position de repos qui est fermée. Ainsi, lorsque l'opérateur relâche le rabat 28, les deux rabats 28, 32 reviennent en position fermée (figure 2).

Les deux rabats 28, 32 présentent des formes rectangulaires longitudinales, et sont reliés par leurs extrémités distales qui sont communes. Alternativement, les deux rabats 28, 32 peuvent présenter des extrémités distales distinctes. Les rabats 28, 32 présentent, de préférence, une longueur d'environ 10cm, afin d'être facilement manipulables par l'opérateur.

Afin d'améliorer l'étanchéité de la fermeture de la poche, les portions d'extrémités 22, 24, et plus particulièrement les rabats 28, 32 peuvent comporter respectivement des surfaces de contact 34, 36 lisses. Ainsi, les surfaces de contact 34, 36 peuvent présenter une rugosité Ra mesurée selon la norme NF EN ISO 4287 inférieure ou égale à 6µm, de préférence inférieure ou égale à 5µm, et plus préférentiellement inférieure ou égale à 4µm. Par ailleurs, les surfaces de contact 34, 36 peuvent présenter une rugosité Ra mesurée selon la norme NF EN ISO 4287 supérieure ou égale à 1µm, de préférence supérieure ou égale à 2µm. Les surfaces de contact 34, 36 lisses permettent en effet d'obtenir un effet d'adhésion entre elles lorsqu'elles sont mises en contact l'une avec l'autre. Une telle adhésion permet notamment de limiter encore plus le passage d'air via la zone d'ouverture 8 pendant la phase de dépressurisation de la poche 1. Pour obtenir les surfaces de contact 34, 36 souhaitées, les rabats 28, 32, à l'état cru, peuvent être vulcanisés l'un contre l'autre, avec un anti-collant entre les deux. On obtient alors deux surfaces complémentaires lissés qui coïncident l'une avec l'autre.

Par ailleurs, afin de limiter la formation de plis ou rides entre les deux surfaces de contact 28, 32, les première et deuxième portions d'extrémité 22, 24, et plus particulièrement les rabats 28, 32, peuvent être formés par plusieurs couches de textile enduit par un matériau élastomérique. Par exemple, chaque feuille 2, 4 peut comprendre une seule couche de textile enduit d'un matériau élastomérique, tandis que les première et deuxième portions d'extrémité 22, 24 peuvent comprendre deux couches textile enduit d'un matériau élastomérique, et les rabats 28, 32 trois couches textile enduit d'un matériau élastomérique. On obtient alors des rabats 28, 32 présentant une rigidité plus importante et moins susceptibles de se plier en venant adhérer entre eux.

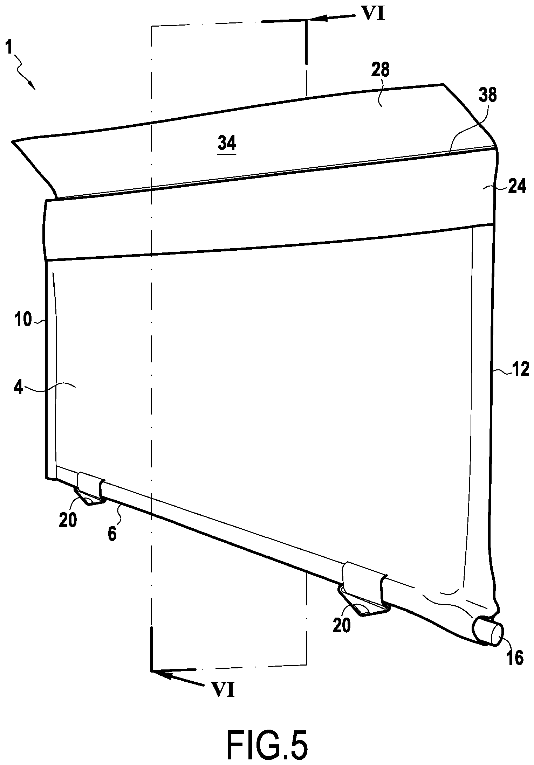

Selon un autre mode de réalisation illustré aux figures 5 et 6, seule la première feuille 1 peut comprendre un pli longitudinal 26, et la deuxième feuille 4 peut comprendre une deuxième portion d'extrémité 24 comportant un moyen d'étanchéité 38, par exemple un bourrelet en matériau élastomérique. Le moyen d'étanchéité 38 est positionné en regard du pli 26, afin qu'ils puissent coopérer ensemble lorsque le rabat 28 est en position de repos. On obtient alors une fermeture étanche lorsque le rabat 28 est en position repliée sur la deuxième portion d'extrémité 24.

Ainsi, grâce à la poche selon l'invention, il devient possible d'introduire du verre à traiter dans la poche avant le traitement thermique, et de le retirer à la fin du traitement thermique, de manière aisée, rapide et fiable. En particulier, un opérateur peut facilement ouvrir la zone d'ouverture pour placer le verre dans la poche, puis laisser la zone d'ouverture se refermer toute seule par élasticité afin d'obtenir une poche fermée de manière étanche. La même procédure est mise en œuvre pour ressortir le verre de la poche.

## Revendications

1. Poche (1) à parois souples pour le feuilletage de verre, destinée à être dépressurisée, comprenant :
- deux feuilles (2, 4) superposées et assemblées de manière étanche selon leurs côtés respectifs regroupés par paires, afin de définir un volume intérieur (14), et
- une zone d'ouverture (8) pour ouvrir ou fermer la poche,
dans laquelle la première feuille (2) comporte une portion d'extrémité, dite première portion d'extrémité (22), la deuxième feuille (4) comporte une portion d'extrémité, dite deuxième portion d'extrémité (24), et les première et deuxième portions d'extrémités délimitent la zone d'ouverture (8) de la poche,
**caractérisée en ce que** la première feuille (2), et en particulier la première portion d'extrémité (22), comprend un unique pli (26), ledit unique pli (26) étant longitudinal et formant un rabat (28) s'étendant le long de la zone d'ouverture (8) de la poche, **en ce que** la première portion d'extrémité (22) présente :
- une position ouverte dans laquelle le rabat (28) est déplié et permet l'accès au volume intérieur (14) de la poche et
- une position fermée dans laquelle le rabat (28) est replié sur la deuxième portion d'extrémité (24) afin de permettre une fermeture étanche de la zone d'ouverture (8)
et **en ce que** le pli longitudinal (26) comporte au moins un matériau élastomérique obtenu par vulcanisation de la première portion d'extrémité (22) en position fermée, de manière à ce que le matériau élastomérique soit déformé élastiquement lorsque la première portion d'extrémité (22) est en position ouverte et ramène la première portion d'extrémité (22) en position fermée.

2. Poche (1) selon la revendication précédente, dans laquelle ledit rabat (28) comprend une surface de contact (34) venant en contact avec la deuxième portion d'extrémité (24) lorsque la poche est fermée, et dans laquelle la surface de contact (34) présente une rugosité Ra mesurée selon la norme NF EN ISO 4287 inférieure ou égale à 6µm, de préférence inférieure ou égale à 5µm, et plus préférentiellement inférieure ou égale à 4µm.

3. Poche (1) selon l'une quelconque des revendications précédentes, dans laquelle la deuxième portion d'extrémité (24) comprend une surface de contact (36) venant en contact avec la première portion d'extrémité (22) lorsque la poche est fermée, et dans laquelle la surface de contact (36) présente une rugosité Ra mesurée selon la norme NF EN ISO 4287 inférieure ou égale à 6µm, de préférence inférieure ou égale à 5µm, et plus préférentiellement inférieure ou égale à 4µm.

4. Poche (1) selon l'une quelconque des revendications 1 à 2, dans laquelle seule la première portion d'extrémité (22) comprend un unique pli longitudinal (26), et dans laquelle la deuxième portion d'extrémité (24) comprend un moyen d'étanchéité (38), par exemple un bourrelet longitudinal en matériau élastomérique s'étendant le long de la zone d'ouverture de la poche, monté en regard du pli longitudinal (26) de la première portion d'extrémité (22), le moyen d'étanchéité (38) étant adapté à coopérer avec le pli longitudinal (26) de la première portion d'extrémité lorsque la poche est fermée.

5. Poche (1) selon l'une quelconque des revendications 1 à 3, dans laquelle la deuxième feuille, et en particulier la deuxième portion d'extrémité (24), comporte également un pli longitudinal (30) formant un rabat (32) s'étendant le long de la zone d'ouverture (8) de la poche, et dans laquelle le pli longitudinal (30) de la deuxième portion d'extrémité (24) comporte au moins un matériau élastomérique obtenu par vulcanisation de la deuxième portion d'extrémité (24) lorsque la première portion d'extrémité (22) est en position fermée, de manière à ce que le matériau élastomérique soit déformé élastiquement lorsque la première portion d'extrémité (22) est en position ouverte et ramène la première portion d'extrémité (22) en position fermée.

6. Poche (1) selon l'une quelconque des revendications précédentes, dans laquelle la première et/ou deuxième portion d'extrémité (22, 24) comporte également des moyens supplémentaires de fermeture, par exemple des aimants ou des fixations réversibles.

7. Poche (1) selon l'une quelconque des revendications précédentes, dans laquelle la première feuille (2), et éventuellement la deuxième feuille (4), comprend une ou plusieurs couches de tissu enduit d'un matériau élastomérique.

8. Poche (1) selon l'une quelconque des revendications précédentes, dans laquelle le pli longitudinal (26) est recouvert d'un matériau élastomérique sur sa partie extérieure.

9. Procédé de fabrication d'une poche (1) à parois souples pour le feuilletage de verre, la poche comprenant :
- deux feuilles (2, 4) superposées et assemblées de manière étanche selon leurs côtés respectifs regroupés par paires, afin de définir un volume intérieur (14), et
- une zone d'ouverture (8) pour ouvrir ou fermer la poche,
la première feuille (2) comportant une portion d'extrémité, dite première portion d'extrémité (22), la deuxième feuille (4) comportant une portion d'extrémité, dite deuxième portion d'extrémité (24), et les première et deuxième portions d'extrémités délimitant la zone d'ouverture (8) de la poche,
dans lequel on réalise un unique pli (26) sur la première feuille, et en particulier sur la première portion d'extrémité (22), ledit unique pli étant longitudinal et formant un rabat (28) s'étendant le long de la zone d'ouverture de la poche, dans lequel la première portion d'extrémité (22) présente :
- une position ouverte dans laquelle le rabat (28) est déplié et permet l'accès au volume intérieur (14) de la poche et
- une position fermée dans laquelle le rabat (28) est replié sur la deuxième portion d'extrémité (24) afin de permettre une fermeture étanche de la zone d'ouverture (8)
et dans lequel :
- on réalise au moins une partie de la première portion d'extrémité (22) avec un matériau élastomérique cru, de préférence lisse,
- on plie longitudinalement, sur la deuxième portion d'extrémité (24), ladite partie de la première portion d'extrémité (22) en matériau élastomérique cru, pour former un rabat (28) s'étendant le long de la zone d'ouverture (8) de la poche, et
- on cuit, de préférence sous pression, le rabat (8) de la première portion d'extrémité (22) en matériau élastomérique cru de manière à former un pli (26) avec un matériau élastomérique vulcanisé.

10. Procédé selon la revendication précédente, dans lequel :
- on réalise également au moins une partie de la deuxième portion d'extrémité (24) avec un matériau élastomérique cru, de préférence lisse,
- on plie longitudinalement, sous le rabat (28) de la première portion d'extrémité (22), ladite partie de la deuxième portion d'extrémité (24) en matériau élastomérique cru, pour former un rabat (32) s'étendant le long de la zone d'ouverture (8) de la poche, parallèlement au rabat (28) de la première portion d'extrémité (22), et
- on cuit, de préférence sous pression, le rabat (28, 32) de la première portion d'extrémité (22) et de la deuxième portion d'extrémité (24) en matériau élastomérique cru, de manière à former, sur chaque feuille (2, 4), un pli avec un matériau élastomérique vulcanisé.

## Patentansprüche

1. Hülle (1) mit flexiblen Wänden zum Folieren von Glas, die dazu bestimmt ist, druckentlastet zu werden, umfassend:
- zwei Folien (2, 4), die übereinander gelegt und entlang ihrer jeweiligen paarweise angeordneten Seiten dicht verbunden sind, um ein Innenvolumen (14) zu definieren, und
- eine Öffnungszone (8), um die Hülle zu öffnen oder zu schließen,
wobei die erste Folie (2) einen Endabschnitt, erster Endabschnitt (22) genannt, umfasst, die zweite Folie (4) einen Endabschnitt, zweiter Endabschnitt (24) genannt, umfasst, und die ersten und zweiten Endabschnitte die Öffnungszone (8) der Hülle begrenzen,
**dadurch gekennzeichnet, dass** die erste Folie (2) und insbesondere der erste Endabschnitt (22) einen einzigen Falz (26) umfasst, wobei der einzige Falz (26) längs verläuft und einen Umschlag (28) bildet, der sich entlang der Öffnungszone (8) der Hülle erstreckt, dass der erste Endabschnitt (22) aufweist:
- eine offene Position, in der der Umschlag (28) aufgeklappt ist und den Zugang zum Innenvolumen (14) der Hülle ermöglicht, und
- eine geschlossene Position, in der der Umschlag (28) auf den zweiten Endabschnitt (24) umgeklappt ist, um ein dichtes Verschließen der Öffnungszone (8) zu ermöglichen,
und dass der Längsfalz (26) mindestens ein Elastomermaterial umfasst, das durch Vulkanisieren des ersten Endabschnitts (22) in geschlossener Position erhalten wird, so dass das Elastomermaterial elastisch verformt wird, wenn der erste Endabschnitt (22) in offener Position ist, und den ersten Endabschnitt (22) wieder in die geschlossene Position bringt.

2. Hülle (1) nach dem vorhergehenden Anspruch, bei der der Umschlag (28) eine Kontaktfläche (34) umfasst, die mit dem zweiten Endabschnitt (24) in Kontakt kommt, wenn die Hülle geschlossen ist, und bei der die Kontaktfläche (34) eine Rauheit Ra, gemessen nach der Norm NF EN ISO 4287, kleiner oder gleich 6 µm, vorzugsweise kleiner oder gleich 5 µm, und noch bevorzugter kleiner oder gleich 4 µm aufweist.

3. Hülle (1) nach einem der vorhergehenden Ansprüche, bei der der zweite Endabschnitt (24) eine Kontaktfläche (36) umfasst, die mit dem ersten Endabschnitt (22) in Kontakt kommt, wenn die Hülle geschlossen ist, und bei der die Kontaktfläche (36) eine Rauheit Ra, gemessen nach der Norm NF EN ISO 4287, kleiner oder gleich 6 µm, vorzugsweise kleiner oder gleich 5 µm, und noch bevorzugter kleiner oder gleich 4 µm aufweist.

4. Hülle (1) nach einem der Ansprüche 1 bis 2, bei der nur der erste Endabschnitt (22) einen einzigen Längsfalz (26) umfasst, und bei der der zweite Endabschnitt (24) ein Dichtungsmittel (38), beispielsweise einen Längswulst aus Elastomermaterial, umfasst, das sich entlang der Öffnungszone der Hülle erstreckt, das gegenüber dem Längsfalz (26) des ersten Endabschnitts (22) montiert ist, wobei das Dichtungsmittel (38) geeignet ist, mit dem Längsfalz (26) des ersten Endabschnitts zusammenzuwirken, wenn die Hülle geschlossen ist.

5. Hülle (1) nach einem der Ansprüche 1 bis 3, bei der die zweite Folie und insbesondere der zweite Endabschnitt (24) ebenfalls einen einen Umschlag (32) bildenden Längsfalz (30) umfasst, der sich entlang der Öffnungszone (8) der Hülle erstreckt, und bei der der Längsfalz (30) des zweiten Endabschnitts (24) mindestens ein Elastomermaterial umfasst, das durch Vulkanisieren des zweiten Endabschnitts (24) erhalten wird, wenn der erste Endabschnitt (22) in geschlossener Position ist, so dass das Elastomermaterial elastisch verformt wird, wenn der erste Endabschnitt (22) in offener Position ist, und den ersten Endabschnitt (22) wieder in die geschlossene Position bringt.

6. Hülle (1) nach einem der vorhergehenden Ansprüche, bei der der erste und/oder der zweite Endabschnitt (22, 24) auch zusätzliche Schließmittel, beispielsweise Magnete oder reversible Befestigungen, umfasst.

7. Hülle (1) nach einem der vorhergehenden Ansprüche, bei der die erste Folie (2) und eventuell die zweite Folie (4) eine oder mehrere mit einem Elastomermaterial bestrichene Gewebsschichten umfasst.

8. Hülle (1) nach einem der vorhergehenden Ansprüche, bei der der Längsfalz (26) auf seinem äußeren Teil mit einem Elastomermaterial überzogen ist.

9. Verfahren zum Herstellen einer Hülle (1) mit flexiblen Wänden zum Folieren von Glas, wobei die Hülle umfasst:
- zwei Folien (2, 4), die übereinander gelegt und entlang ihrer jeweiligen paarweise angeordneten Seiten dicht verbunden sind, um ein Innenvolumen (14) zu definieren, und
- eine Öffnungszone (8), um die Hülle zu öffnen oder zu schließen,
wobei die erste Folie (2) einen Endabschnitt, erster Endabschnitt (22) genannt, umfasst, die zweite Folie (4) einen Endabschnitt, zweiter Endabschnitt (24) genannt, umfasst, und die ersten und zweiten Endabschnitte die Öffnungszone (8) der Hülle begrenzen,
wobei ein einziger Falz (26) auf der ersten Folie und insbesondere auf dem ersten Endabschnitt (22) gebildet wird, wobei der einzige Falz längs verläuft und einen Umschlag (28) bildet, der sich entlang der Öffnungszone der Hülle erstreckt, wobei der erste Endabschnitt (22) aufweist:
- eine offene Position, in der der Umschlag (28) aufgeklappt ist und den Zugang zum Innenvolumen (14) der Hülle ermöglicht, und
- eine geschlossene Position, in der der Umschlag (28) auf den zweiten Endabschnitt (24) umgeklappt ist, um ein dichtes Verschließen der Öffnungszone (8) zu ermöglichen,
und bei dem:
- mindestens ein Teil des ersten Endabschnitts (22) mit einem vorzugsweise glatten Elastomerrohmaterial hergestellt wird,
- der Teil des ersten Endabschnitts (22) aus Elastomerrohmaterial auf den zweiten Endabschnitt (24) längs umgelegt wird, um einen Umschlag (28) zu bilden, der sich entlang der Öffnungszone (8) der Hülle erstreckt, und
- vorzugsweise unter Druck der Umschlag (8) des ersten Endabschnitts (22) aus Elastomerrohmaterial gehärtet wird, um einen Falz (26) mit einem vulkanisierten Elastomermaterial zu bilden.

10. Verfahren nach dem vorhergehenden Anspruch, bei dem:
- auch mindestens ein Teil des zweiten Endabschnitts (24) mit einem vorzugsweise glatten Elastomerrohmaterial hergestellt wird,
- unter dem Umschlag (28) des ersten Endabschnitts (22) der Teil des zweiten Endabschnitts (24) aus Elastomerrohmaterial gefalzt wird, um einen Umschlag (32) zu bilden, der sich entlang der Öffnungszone (8) der Hülle parallel zum Umschlag (28) des ersten Endabschnitts (22) erstreckt, und
- vorzugsweise unter Druck der Umschlag (28, 32) des ersten Endabschnitts (22) und des zweiten Endabschnitts (24) aus Elastomerrohmaterial gehärtet wird, um auf jeder Folie (2, 4) einen Falz mit einem vulkanisierten Elastomermaterial zu bilden.

## Claims

1. A flexible-walled bag (1) for laminating glass, the bag being for depressurizing, and comprising:
- two superposed sheets (2, 4) that are assembled in leaktight manner along their respective sides that are grouped together in pairs, so as to define an inside volume (14); and
- an opening zone (8) for opening or closing the bag;
wherein the first sheet (2) includes an end portion, referred to as a first end portion (22), the second sheet (4) includes an end portion, referred to as a second end portion (24), and the first and second end portions define the opening zone (8) of the bag;
the bag being **characterized in that** the first sheet (2), and in particular the first end portion (22), includes a single fold (26), said single fold (26) being longitudinal and forming a flap (28) that extends along the opening zone (8) of the bag; and **in that** the first end portion (22) presents:
- an open position in which the flap (28) is unfolded and gives access to the inside volume (14) of the bag; and
- a closed position in which the flap (28) is folded against the second end portion (24) so as to enable the opening zone (8) to be closed in sealed manner,
and wherein the longitudinal fold (26) includes at least one elastomer material obtained by vulcanizing the first end portion (22) while in the closed position so that the elastomer material is elastically deformed when the first end portion (22) is in the open position and returns the first end portion (22) to the closed position.

2. A bag (1) according to the preceding claim, wherein said flap (28) includes a contact surface (34) that comes into contact with the second end portion (24) when the bag is closed, and wherein the contact surface (34) presents roughness Ra measured in accordance with the standard NF EN ISO 4287 that is less than or equal to 6 µm, preferably less than or equal to 5 µm, and more preferably less than or equal to 4 µm.

3. A bag (1) according to any preceding claim, wherein the second end portion (24) includes a contact surface (36) that comes into contact with the first end portion (22) when the bag is closed, and wherein the contact surface (36) presents roughness Ra measured in accordance with the standard NF EN ISO 4287 that is less than or equal to 6 µm, preferably less than or equal to 5 µm, and more preferably less than or equal to 4 µm.

4. A bag (1) according to any one of claims 1 to 2, wherein only the first end portion (22) has a single longitudinal fold (26), and wherein the second end portion (24) includes sealing means (38), e.g. a longitudinal bead of elastomer material extending along the opening zone of the bag, mounted facing the longitudinal fold (26) of the first end portion (22), the sealing means (38) being adapted to co-operate with the longitudinal fold (26) of the first end portion when the bag is closed.

5. A bag (1) according to any one of claims 1 to 3, wherein the second sheet, and in particular the second end portion (24), also includes a longitudinal fold (30) forming a flap (32) extending along the opening zone (8) of the bag, and wherein the longitudinal fold (30) of the second end portion (24) includes at least one elastomer material obtained by vulcanizing the second end portion (24) while the first end portion (22) is in the closed position, so that the elastomer material is deformed elastically when the first end portion (22) is in the open position and returns the first end portion (22) to the closed position.

6. A bag (1) according to any preceding claim, wherein the first and/or second end portion (22, 24) also includes additional closure means, e.g. magnets or reversible fasteners.

7. A bag (1) according to any preceding claim, wherein the first sheet (2), and optionally the second sheet (4), comprises one or more layers of fabric coated in an elastomer material.

8. A bag (1) according to any preceding clam, wherein the longitudinal fold (26) is covered with an elastomer material on its outside portion.

9. A method of fabricating a bag (1) having flexible walls for laminating glass, the bag comprising:
- two superposed sheets (2, 4) that are assembled in leaktight manner along their respective sides that are grouped together in pairs, so as to define an inside volume (14); and
- an opening zone (8) for opening or closing the bag;
the first sheet (2) including an end portion, referred to as a first end portion (22), the second sheet (4) includes an end portion, referred to as a second end portion (24), and the first and second end portions define the opening zone (8) of the bag;
wherein a single fold (26) is made in the first sheet, and in particular in the first end portion (22), said single fold being longitudinal and forming a flap (28) extending along the opening zone of the bag, wherein the first end portion (22) presents:
- an open position in which the flap (28) is unfolded and gives access to the inside volume (14) of the bag; and
- a closed position in which the flap (28) is folded against the second end portion (24) so as to enable the opening zone (8) to be closed in leaktight manner and the method comprising the following steps:
- making at least a part of the first end portion (22) out of, preferably smooth, green elastomer material;
- folding said part of the first end portion (22) of green elastomer material longitudinally onto the second end portion (24), so as to form a flap (28) extending along the opening zone (8) of the bag; and
- heating, preferably under pressure, the flap (8) of the first end portion (22) made of green elastomer material in such a manner as to form a fold (26) made of vulcanized elastomer material.

10. A method according to the preceding claim, comprising the following steps:
- also making at least a part of the second end portion (24) out of, preferably smooth, green elastomer material;
- folding said part of the second end portion (24) made of green elastomer material longitudinally, under the flap (28) of the first end portion (22), in order to form a flap (32) extending along the opening zone (8) of the bag, parallel to the flap (28) of the first end portion (22); and
- heating, preferably under pressure, the flaps (28, 32) of the first end portion (22) and of the second end portion (24) made of green elastomer material so as to form respective folds in each sheet (2, 4) made of vulcanized elastomer material.
